# EUROPEAN PATENT SPECIFICATION

(11) **EP 1 477 417 B1**
(45) Date of publication and mention of the grant of the patent: **22.11.2006**
(21) Application number: 02806857.5
(22) Date of filing: 13.12.2002
(51) Int. Cl.: B65D 30/20, B31B 45/00

(54) **MACHINE AND METHOD OF OBTAINING A LARGE TUBE WHICH IS MADE FROM A FLEXIBLE PLASTIC MATERIAL AND WHICH IS FOLDED IN THE FORM OF BELLOWS**
MASCHINE UND VERFAHREN ZUM ERHALT EINES GROSSEN SCHLAUCHS AUS EINEM FLEXIBLEN KUNSTSTOFFMATERIAL, DAS IN FORM EINES BALGS GEFALTET IST
MACHINE ET PROCEDE D'OBTENTION D'UN TUBE DE GRANDES DIMENSIONS FAIT D'UN MATERIAU PLASTIQUE FLEXIBLE PLIE EN FORME DE SOUFFLET

(30) Priority: 21.02.2002 ES 200200497
(43) Date of publication of application: 17.11.2004
(73) Proprietor: Sotrafa, S.A., 04700 El Ejido (ES)
(72) Inventor: CUESTA LAGÜERA, Francisco, E-04700 El Ejido (ES)
(74) Representative: Canela Giménez, Teresa
(86) International application number: PCT/ES2002/000594
(87) International publication number: WO 2003/070584

(56) References cited:
- US-A- 5 398 486
- US-A- 5 832 701
- US-A- 6 105 337

## Description

The subject of the present patent is a machine and process for obtaining a large tube made of flexible plastics material folded in the form of bellows for use in agricultural crop farms for storing feeds and fodder.

### PRIOR ART

The use of sacks to store livestock feeds originating from agricultural crops, such as maize, wheat, etc., or else originating from by-products of industrial processes, such as sugar beet pulp, hops, potato starch, etc. is widespread.

The drawback of said sacks is their limited capacity, which brings with it significant expenditure derived from the packaging materials and the manipulation of the increased number of sacks which are generally necessary.

If there is a desire to increase the storage capacity, logically larger sacks have to be resorted to. The drawback is that a sack with these characteristics is very cumbersome and difficult to manipulate, above all during the filling operation.

Another aspect to take into account is that it is very important for stock breeders to store in the field the livestock feeds originating from agricultural crops. This necessity usually involves piling up the fodder in the same harvest field and protecting it from bad weather with some type of covering, such as plastic sheets.

The drawback of this other procedure, which is an alternative to the harvesting and setting aside in sacks of the agricultural products, is that preservation is very defective because the product cannot be well sealed and cannot be insulated against the sun and other atmospheric agents which adversely attack and degrade said feeds.

The subject of the present invention has been created to solve this problem and provides large sacks, with a fold that allows very easy filling using mechanical means, even in the field, and leads to a significant saving in time and packaging material and, furthermore, uniform filling of the plastic sack.

### BRIEF DESCRIPTION OF THE INVENTION

The present invention consists of a machine and the process carried out by said machine, for obtaining a large tube made of flexible plastics material folded in the form of bellows, which machine consists of a multiplicity of folding devices, the number of said devices depending on the width of the mouth of the tube to be folded, each device consisting of a fixing support for initial threading of the plastic film tube, lower and upper blades capable of moving vertically and horizontally and a folding back support and with means for controlling operation of the entire machine.

Said machine according to the invention produces the fold of said large tubes made of plastic film material according to a process in successive phases, which develop as a result of the movement of the blades which tension, move and double the film until it is left in the characteristic shape resulting from the present invention, which is the form of bellows.

The invention solves with mechanical means the problem of folding large plastic tubes to form sacks, resulting in a folded tube such as can be used to allow convenient opening and filling thereof, as is described in detail hereinafter.

### BRIEF DESCRIPTION OF THE DRAWINGS

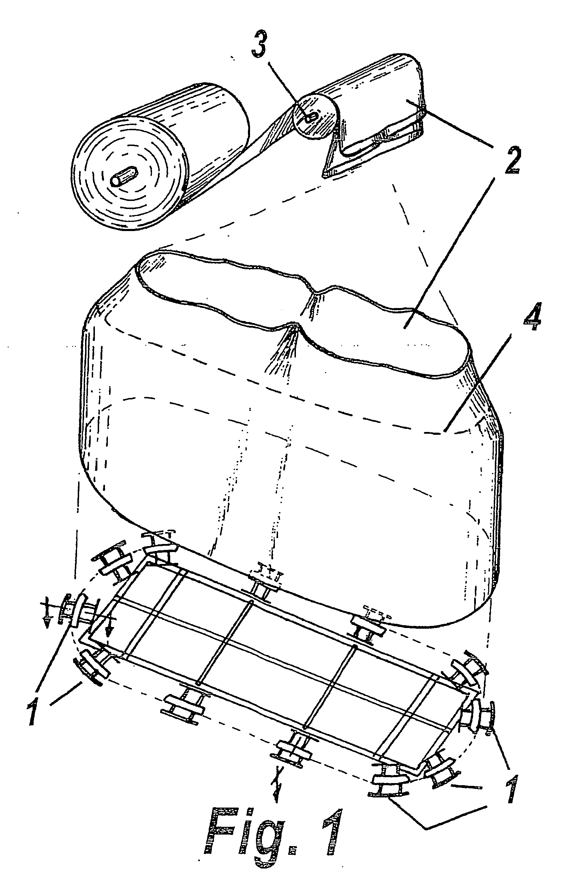

An exemplary but non-limiting embodiment of the invention will be described hereinafter to assist understanding of the subject of the invention, accompanied by six pages of drawings in which Fig. 1 is a schematic view of the machine of the invention with the arrangement of folding devices suitable for its adaptation to the width of the mouth of the tube to be folded, also showing feeding of the machine starting from a reel of tubular plastic film.

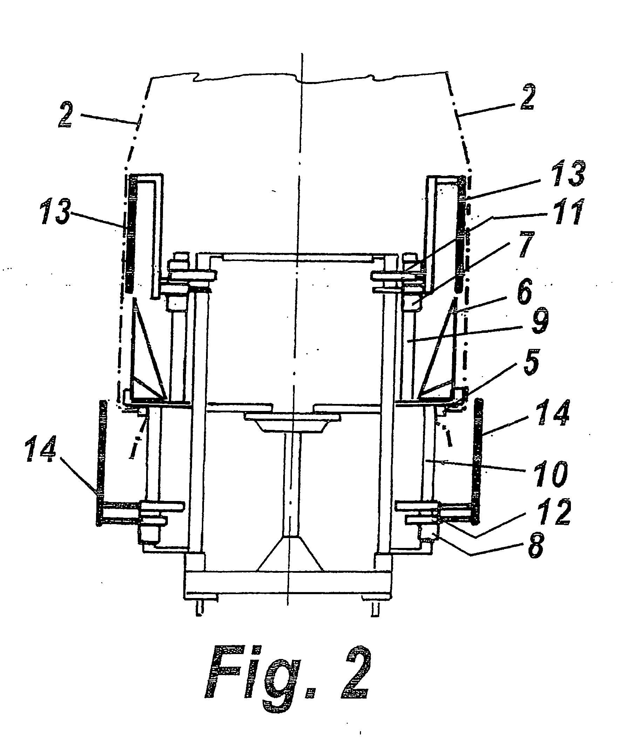

Fig. 2 is a front view of two opposing folding devices in which the parts involved in the folding process described by the present invention are shown.

Figs. 3 to 12 describe the movements carried out by the folding blades in each phase of the folding cycle described in the present invention, showing them in a front view of a folding device with the plastic film tube situated on the right-hand side.

Fig. 13 is a perspective view showing the plastic film tube, doubled once, which is obtained by means of the machine and the process of the invention. The flight of the folds has been exaggerated so they can be appreciated.

Figs. 14 and 15 are schematic representations of the use on farms of the folded tube obtained by means of the present invention.

### DETAILED DESCRIPTION OF THE INVENTION

The invention consists of a machine and process for folding a large tubular plastic film into bellows by simultaneously using a plurality of plastic film folding devices (1), characteristic of the present invention.

For this purpose, a tubular plastic film, which may be of single or multiple layers, depending on the properties desired of the plastic film with respect to atmospheric agents, is used as the starting point.

The machine (Fig. 1) which produces the fold in the tube in accordance with the system described in the present invention is constructed by creating an arrangement without break in continuity of the folding devices (1) which is adjustable to the width and shape of the mouth of the tube to be folded (2). The number of said devices (1) will vary, and therefore the size the folding devices (1) which constitute the machine according to the invention, depending on the size and shape of the mouth of the tube (2).

The folding machine is fed with plastic film, which forms the tube (2) to be folded, in a vertical manner by means of upper rollers (3). Respective guides (4) of perimetric ellipsoidal shape, adaptable to the extent of the tube to be folded, guide the plastic film toward the folding devices (1) in which said film is threaded.

The plastic film is threaded in the folding machine by fixing it manually in the fixing element (5) after overlapping the back support (6) which is where the conveniently folded tube is finally gathered.

A controller, not shown, controls the process. The transverse adjustment, to the right and left according to the dimensions of the flexible plastic tube to be folded, is produced by means of guides and shafts motorised by reduction motors, not shown.

Each folding device (1) is formed by a pneumatic linear actuator (7 and 8), without driver, which by means of rolling linear guides (9 and 10) moves a pneumatic linear unit (11 and 12) in which are arranged one upper blade and one lower blade. The blades (13 and 14) have vertical and horizontal movement. In a preferred construction of the invention the lower driving blade has the shape of a U, while the upper blade has the shape of an inverted U, one being displaced laterally with respect to the other, in such a way that their respective control elements do not collide and that they can be positioned one in front of or behind the other in their reciprocal movements.

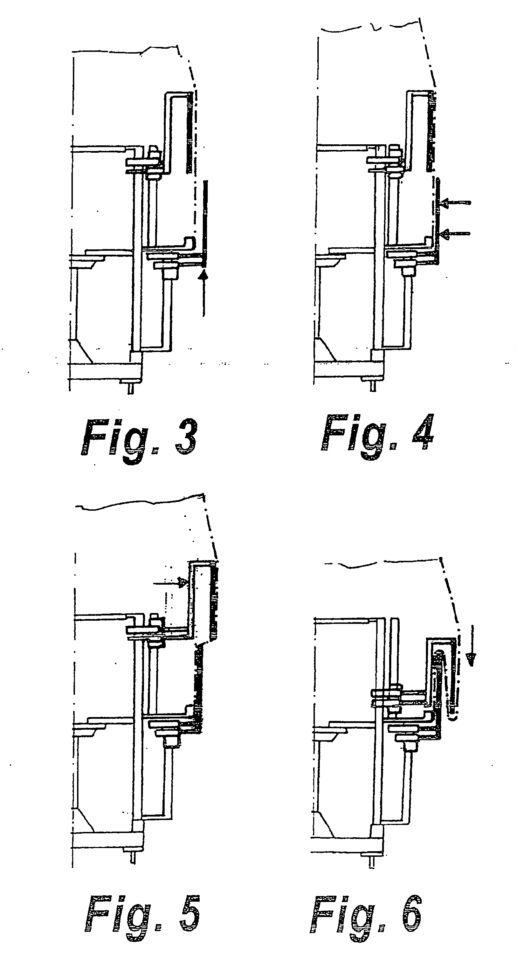

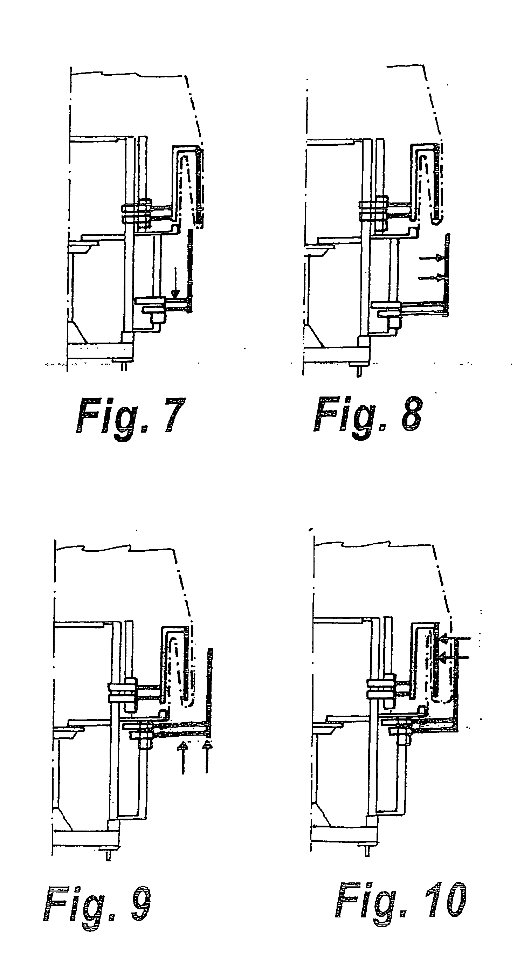

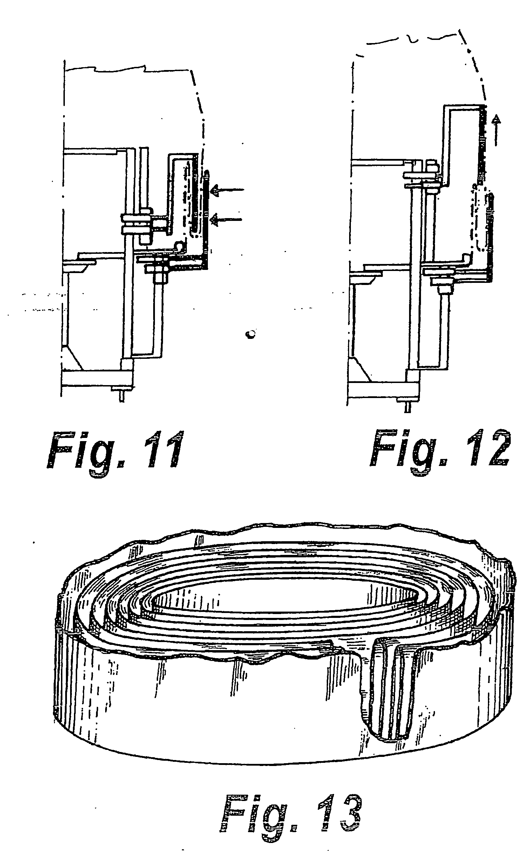

Once the tube has been threaded in the fixing element (5) the machine, actuated in accordance with the process of the present invention, carries out the following phases in succession:
a. ascent of the lower blade (14) until it is positioned parallel to the back support (6) (Fig. 3).
b. fixing the sheet of the tube (2) in the back support (6) compressing the folds already made by displacing the lower blade (14) toward the interior of the machine (Fig. 4).
c. tightening the following portion to be doubled of the sheet of the tube (2) by laterally displacing the upper blade (13) toward the outside (Fig. 5).
d. doubling the following portion of plastic film tube (2) by vertically descending the upper blade (13) so it is positioned parallel and further outwards with respect to the back support (6) and the lower blade (14) (Fig. 6).
e. descent of the lower blade (14) until it is positioned in its starting position (Fig. 7).
f. horizontal displacement toward the outside of the lower blade (14) further away from the horizontal position where the upper blade (13) is located (Fig. 8).
g. vertical ascent of the lower blade (14) until it is positioned parallel to the upper blade (13) and further outward horizontally (Fig. 9).
h. fixing the interior folds already made by means of inward horizontal displacement in the direction of the centre of the machine, of the upper blade (13) pressing the plastic film of the tube (2) (Fig. 10).
i. fixing the outer fold made in the last position, by inward horizontal displacement in the direction toward the centre of the machine, of the lower blade (14), pressing the plastic film against the upper blade (13) (Fig. 11).
j. vertical ascent of the upper blade (13) up to its initial position (Fig. 12).
k. repetition of phases c to j until the machine is stopped.

Control means, not shown, such as a microprocessor or a group of microprocessors control the robot which controls the moving parts of the machine. Said control means are programmable and respond to the different situations for manipulation of the plastic film tube, so it can be folded.

It is known that the consistency and properties of a plastic film are very sensitive to variations in the ambient temperature due, for example, to seasonal variations. The same tube folding operation will also vary the tension which is necessary in the folding blades for the above-described cycle.

The aforementioned control means take account of the above-mentioned factors, adapting the working cycles and properties of the machine according to the invention to each particular situation and automating the adaptation. For example, after a determined number of tube folding cycles have been carried out, the control means of the machine adjust the tensions of the folding blades to adapt to the resistance and new tension of the plastic film.

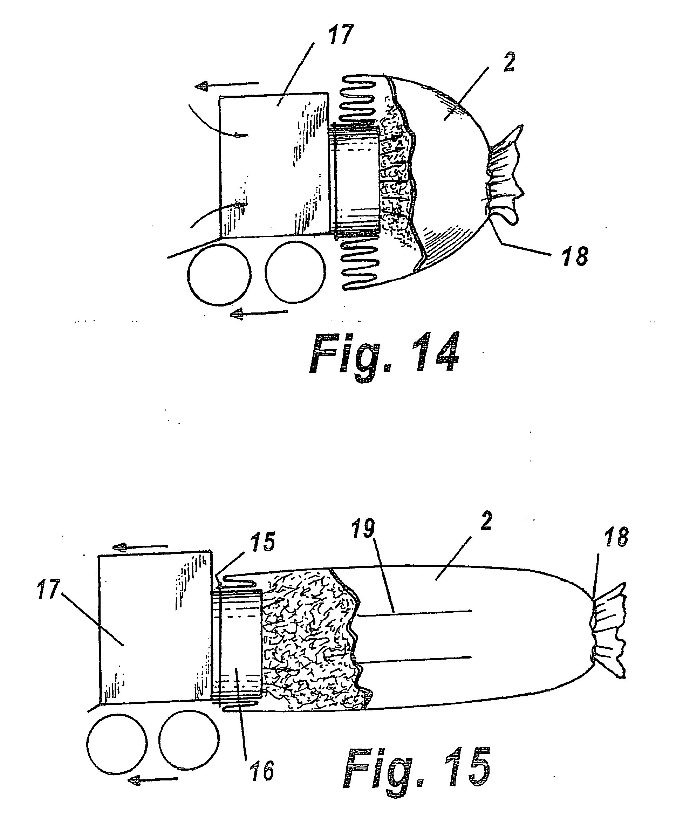

As a result of the above-described folding process a folded flexible plastic film tube is obtained mechanically in which one of the ends of the above-mentioned tube (2) is in the inner wall of the cylinder formed by said folded tube (Fig. 13) while the opposing end of the tube (2) is disposed in the exterior wall of said cylinder, being folded in a zigzag manner, between one wall and the other, throughout the extension of said tube. The height of said cylindrical body corresponds to the size of the folding blades (13 and 14).

In one non-limiting use of the folded tube according to the machine and process described, the end of the folded tube which corresponds to the interior wall of said cylinder is then fastened, at the moment of its use on a farm, by means of a fixing band (15) to the mouth (16) of the loading vehicle (17).

At the opposite end, that which corresponds to the exterior wall of the cylinder obtained by folding the plastic film tube (2) is knotted (18), creating the base of the sack according to the present invention. Said base is reinforced with a reinforcing screen which can be formed, for example, by a containing lattice connected by means of tensile cables to a rolling reel which maintains the appropriate tension to said reinforcing wall.

Horizontal lines (19) in the side of the plastic film tube (2) shown are used to indicate the filling of the sack with the agricultural product used for that purpose.

The loading vehicle (17) advances in the direction opposed to the filling sack and receives the loadable products by any conventional process, such as rolling belts, rolling rings, etc. As the plastic film tube (2), now converted into a sack as a result of knotting (18) at its end, is being filled the folding in the form of bellows used in the present invention allows easy opening of the sack, without blocks, until it is filled to the desired volume.

Owing to their design characteristics, these sacks can be closed at their other end with another knot and can be left in the place where they were filled on the farm, in such a manner that, at a convenient time, it is sufficient to open one of the ends and use its contents in this same location, displacement of the sacks and the expenditure derived from storing them being avoided, with the consequent savings.

## Claims

1. Machine for obtaining a large tube made of flexible plastic material folded in the form of bellows, **characterized in that** it consists of a multiplicity of folding devices (1) which vary in number and position according to the width and shape of the mouth of the tube (2) and arranged without break in continuity around this mouth in a more or less circular or elliptical form, each device consisting of a fixing support (5) for initial threading of the plastic film tube (2), lower (14) and upper (13) blades capable of moving vertically and horizontally, having the shapes of U and inverted U in a vertical cross-section, and a back support (6) of the fold and with means for controlling operation of the entire machine.

2. Machine for obtaining a large tube made of flexible plastics material folded in the form of bellows according to the preceding claim, **characterised in that** the lower blade (14) of said blades (13 and 14) is U-shaped and the upper blade (13) has the form of an inverted U, one blade being displaced horizontally with respect to the other.

3. Machine for obtaining a large tube made of flexible plastics material folded in the form of bellows according to the preceding claims, **characterised in that** the control means of the aforementioned folding machine for said tube (2) consist of a microprocessor or a group of microprocessors, which can be programmed to control the variations in the ambient temperature and the advance in the process of folding said tube (2), adapting the tension of the blades (13 and 14) and controlling all moving parts of said machine.

4. Machine for obtaining a large tube made of flexible plastics material folded in the form of bellows according to the preceding claims, **characterised in that** said control means for said folding machine use robots to control its moving parts.

5. Machine for obtaining a large tube made of flexible plastics material folded in the form of bellows according to the preceding claims, **characterised in that** perimetric ellipsoidal (4) guides adapted to the width of the mouth of the tube to be folded are provided.

6. Process for obtaining a large tube made of flexible plastics material folded in the form of bellows with the aid of the machine of claim 1, **characterised by** a succession of phases comprising:
a. ascent of the lower blade (14) until it is positioned parallel to the back support (6).
b. fixing the sheet of the tube (2) in the back support (6) compressing the folds already made by displacing the lower blade (14) toward the interior of the machine.
c. tightening the following portion to be doubled of the sheet of the tube (2) by laterally displacing the upper blade (13) toward the outside.
d. doubling the following portion of plastic film tube (2) by vertically descending the upper blade (13) so it is positioned parallel to and further outwards from the back support (6) and the lower blade (14).
e. descent of the lower blade (14) until it is positioned in its starting position.
f. horizontal displacement toward the outside of the lower blade (14) further away from the horizontal position where the upper blade (13) is located.
g. vertical ascent of the lower blade (14) until it is positioned parallel to the upper blade (13) and further outwards horizontally.
h. fixing the interior folds already made by means of inward horizontal displacement in the direction of the centre of the machine, of the upper blade (13) pressing the plastic film of the tube (2).
i. fixing the outer fold made in the last position by inward horizontal displacement in the direction toward the centre of the machine, of the lower blade (14), pressing the plastic film against the upper blade (13).
j. vertical ascent of the upper blade (13) toward its initial position.
k. repetition of phases c to j until the machine stops.

## Patentansprüche

1. Maschine zum Erhalten eines aus einem flexiblen Plastikmaterial hergestellten, in Form eines Faltbalgs gefalteten, weiten Schlauchs, **dadurch gekennzeichnet, dass** sie aus einer Vielzahl von Faltvorrichtungen (1) besteht, deren Anzahl und Position gemäß der Breite und der Form der Öffnung des Schlauchs (2) variieren und die ohne Unterbrechung der Kontinuität um diese Öffnung herum in einer mehr oder weniger kreisförmigen oder elliptischen Form angeordnet sind, wobei jede Vorrichtung aus einer Befestigungsstütze (5) für das anfängliche Einfädeln des Plastikiolienschlauchs (2), unteren (14) und oberen (13) Blättern, die sich vertikal und horizontal bewegen können und im vertikalen Querschnitt die Form eines U und eines umgekehrten U aufweisen, und einer hinteren Stütze (6) für die Falte besteht, und Mittel zum Steuern des Betriebs der gesamten Maschine aufweist.

2. Maschine zum Erhalten eines aus einem flexiblen Plastikmaterial hergestellten, in Form eines Faltbalgs gefalteten, weiten Schlauchs gemäß dem vorhergehenden Anspruch, **dadurch gekennzeichnet, dass** das untere Blatt (14) der Blätter (13 und 14) U-förmig ist und das obere Blatt (13) die Form eines umgekehrten U aufweist, wobei ein Blatt in Bezug auf das andere horizontal verschoben ist.

3. Maschine zum Erhalten eines aus einem flexiblen Plastikmaterial hergestellten, in Form eines Faltbalgs gefalteten, weiten Schlauchs gemäß den vorhergehenden Ansprüchen, **dadurch gekennzeichnet, dass** die Steuermittel der zuvor erwähnten Faltmaschine für den Schlauch (2) aus einem Mikroprozessor oder einer Gruppe von Mikroprozessoren bestehen, die dahingehend programmiert werden können, die Veränderungen der Umgebungs-temperatur und den Fortschritt beim Prozess des Faltens des Schlauchs (2) zu kontrollieren, wobei sie die Spannung der Blätter (13 und 14) anpassen und alle beweglichen Teile der Maschine steuern.

4. Maschine zum Erhalten eines aus einem flexiblen Plastikmaterial hergestellten, in Form eines Faltbalgs gefalteten, weiten Schlauchs gemäß den vorhergehenden Ansprüchen, **dadurch gekennzeichnet, dass** die Steuermittel für die Faltmaschine Roboter einsetzen, um deren bewegliche Teile zu steuern.

5. Maschine zum Erhalten eines aus einem flexiblen Plastikmaterial hergestellten, in Form eines Faltbalgs gefalteten, weiten Schlauchs gemäß den vorhergehenden Ansprüchen, **dadurch gekennzeichnet, dass** perimetrische ellipsenförmige (4) Führungen vorgesehen sind, die an die Breite der Öffnung des zu faltenden Schlauchs angepasst sind.

6. Verfahren zum Erhalten eines aus einem flexiblen Plastikmaterial hergestellten, in Form eines Faltbalgs gefalteten, weiten Schlauchs mit Hilfe der Maschine nach Anspruch 1, **gekennzeichnet durch** eine Abfolge von Phasen, umfassend:
a. das Hinaufbewegen des unteren Blatts (14), bis es parallel zur hinteren Stütze (6) positioniert ist,
b. das Befestigen der Schlauchbahn (2) in der hinteren Stütze (6), wobei die bereits geschaffenen Falten zusammengedrückt werden, indem das untere Blatt (14) zum Inneren der Maschine verschoben wird,
c. das Straffen des nachfolgenden, zusammenzufaltenden Abschnitts der Schlauchbahn (2), indem das obere Blatt (13) nach außen seitlich verschoben wird,
d. das Zusammenfalten des nachfolgenden Abschnitts des Plastikfolienschlauchs (2), indem das obere Blatt (13) vertikal herabgesenkt wird, so dass es parallel zur hinteren Stütze (6) und zum unteren Blatt (14) und weiter außerhalb davon positioniert ist,
e. das Herabsenken des unteren Blatts (14), bis es in seiner Ausgangsstellung positioniert ist,
f. das horizontale Verschieben zur Außenseite des unteren Blatts (14), weiter weg von der horizontalen Position, in der sich das obere Blatt (13) befindet,
g. das vertikale Hinaufbewegen des unteren Blatts (14), bis es parallel zum oberen Blatt (13) und horizontal weiter außen positioniert ist,
h. das Befestigen der bereits geschaffenen Innenfalten mittels einer nach innen gerichteten horizontalen Verschiebung des oberen Blatts (13), das auf die Plastikfolie des Schlauchs (2) drückt, in Richtung des Zentrums der Maschine,
i. das Befestigen der in der letzten Position geschaffenen Außenfalte **durch** eine nach innen gerichtete horizontale Verschiebung des unteren Blatts (14), das die Plastik-folie gegen das obere Blatt (13) drückt, in Richtung zum Zentrum der Maschine,
j. das vertikale Hinaufbewegen des oberen Blatts (13) in seine Anfangsstellung,
k. das Wiederholen der Phasen c bis j, bis die Maschine stoppt.

## Revendications

1. Machine pour obtenir un grand tube fait de matériau plastique flexible plié sous forme de soufflets, **caractérisée en ce qu'**elle se compose d'une multiplicité de dispositifs de pliage (1) dont le nombre et la position varient en fonction de la largeur de l'ouverture du tube (2) et disposés sans rupture de continuité autour de cette ouverture selon une forme plus ou moins elliptique ou circulaire, chaque dispositif se composant d'un support de fixation (5) pour l'enfilement initial du tube (2) en feuille de plastique, d'une lame inférieure (14) et d'une lame supérieure (13) capables de se déplacer verticalement et horizontalement, ayant des formes en U et en U inversé en coupe verticale, et d'un support arrière (6) du pli et avec des moyens pour commander le fonctionnement de l'ensemble de la machine.

2. Machine pour obtenir un grand tube fait d'un matériau plastique flexible plié sous forme de soufflets selon la revendication précédente, **caractérisée en ce que** la lame inférieure (14) desdites lames (13 et 14) est en forme de U et **en ce que** la lame supérieure (13) est en forme de U inversé, une lame étant déplacée horizontalement par rapport à l'autre.

3. Machine pour obtenir un grand tube fait d'un matériau plastique flexible plié sous forme de soufflets selon les revendications précédentes, **caractérisée en ce que** les moyens de commande de la machine de pliage susmentionnée pour ledit tube (2) se composent d'un microprocesseur ou d'un groupe de microprocesseurs, qui peuvent être programmés pour commander les variations de la température ambiante et le déroulement du procédé de pliage dudit tube (2), adaptant la tension des lames (13 et 14) et commandant toutes les pièces mobiles de ladite machine.

4. Machine pour obtenir un grand tube fait d'un matériau plastique flexible plié sous forme de soufflets selon les revendications précédentes, **caractérisée en ce que** lesdits moyens de commande de ladite machine de pliage utilisent des robots pour commander leurs pièces mobiles.

5. Machine pour obtenir un grand tube fait d'un matériau plastique flexible plié sous forme de soufflets selon les revendications précédentes, **caractérisée en ce que** des guides périmétriques ellipsoïdaux (4) adaptés à la largeur de l'ouverture du tube à plier sont prévus.

6. Procédé pour obtenir un grand tube fait d'un matériau plastique flexible plié sous forme de soufflets à l'aide de la machine de la revendication 1, **caractérisé par** une succession de phases comprenant :
a. la montée de la lame inférieure (14) jusqu'à ce qu'elle soit positionnée parallèlement au support arrière (6).
b. la fixation de la feuille du tube (2) dans le support arrière (6) en comprimant les plis déjà faits en déplaçant la lame inférieure (14) vers l'intérieur de la machine.
c. le resserrement de la portion suivante devant être doublée de la feuille du tube (2) en déplaçant latéralement la lame supérieure (13) vers l'extérieur.
d. le doublage de la partie suivante du tube (2) en feuille de plastique en descendant verticalement la lame supérieure (13) de telle sorte qu'elle soit positionnée parallèlement au support arrière (6) et à la lame inférieure (14) et plus à l'extérieur de ceux-ci.
e. la descente de la lame inférieure (14) jusqu'à ce qu'elle soit placée dans sa position de départ.
f. le déplacement horizontal de la lame inférieure (14) vers l'extérieur, au-delà de la position horizontale dans laquelle est située la lame supérieure (13).
g. la montée verticale de la lame inférieure (14) jusqu'à ce qu'elle soit positionnée parallèlement à la lame supérieure (13) et placée plus à l'extérieur horizontalement.
h. la fixation des plis intérieurs déjà réalisés au moyen d'un déplacement horizontal vers l'intérieur, dans la direction du centre de la machine, de la lame supérieure (13) opérant une pression de la feuille de plastique du tube (2).
i. la fixation du pli externe réalisé en dernière position par un déplacement horizontal intérieur, dans la direction du centre de la machine, de la lame inférieure (14), opérant une pression de la feuille de plastique contre la lame supérieure (13).
j. la montée verticale de la lame supérieure (13) vers sa position initiale.
k. la répétition des phases c à j jusqu'à l'arrêt de la machine.
